# EUROPEAN PATENT APPLICATION

(11) **EP 2 388 696 A1**
(43) Date of publication of application: **23.11.2011**
(21) Application number: 11162981.2
(22) Date of filing: 19.04.2011
(51) Int. Cl.: G06F 9/445, G06F 11/14

(54) **Setup apparatus to set up image forming apparatus, method of storing backup file and setup method thereof**

(30) Priority: 26.04.2010 KR 20100038356
(71) Applicant: Samsung Electronics Co., Ltd., Suwon-si, Gyeonggi-do 442-742 (KR)
(72) Inventor: Kim, So-young, Suwon-si (KR); Park, Ji-sub, Suwon-si (KR)
(74) Representative: Waddington, Richard

(57) **Abstract**

A setting method to set an image forming apparatus is provided. The setting method includes: receiving a selection a backup file including user setting items, reading out the selected backup file from a storage medium, displaying a screen with all of a plurality of user setting items included in the read-out backup file, receiving a selection of at least one user setting item from all of the user setting items on the screen; and setting the image forming apparatus by restoring the selected user setting item selectively.

## Description

### BACKGROUND

### 1. Field

The embodiments relate to a setting apparatus to set an image forming apparatus, a method of storing a backup file and a setting method thereof, and more particularly, to a setting apparatus which displays user setting items in order for a user to set an image forming apparatus selectively, and a method of storing a backup file and a setting method thereof.

### 2. Description of the Related Art

Thanks to the advances in electronic technologies, diverse types of image forming apparatuses are used in a house as well as in an office. The image forming apparatus refers to an apparatus to form an image on diverse recording media, such as paper. For example, the image forming apparatus may include a printer, a scanner, a copier, a facsimile machine, and a multifunction peripheral.

Functions of the image forming apparatus may be set by a user appropriately. A recently popularized image forming apparatus may have an additional function, such as job managing, authentication, emailing, in addition to a simple printing or scanning function. The user sets a function that he/she wishes to use appropriately and uses the image forming apparatus.

A value used to set the image forming apparatus, that is, setting information, may be backed up, that is, stored in a backup file format. The user restores the backup file afterward and sets the function of the image forming apparatus based on the information stored in the corresponding backup file.

However, there is a problem in that the user does not know which user setting item of the backup file has been set, when restoring the backup file. Also, it is difficult to apply part of the items without applying all of the items already set as they are.

Therefore, there is a need for an apparatus and a method of setting an image forming apparatus more easily and efficiently.

### SUMMARY

Accordingly, it is an aspect of at least one embodiment to provide a setting apparatus which displays user setting items included in a backup file in order for a user to restore the backup file selectively, and a setting method thereof.

It is another aspect of at least one embodiment to provide a method of storing a backup file, which provides a screen enabling a user to set and restore items more easily, while storing a backup file.

Additional aspects and/or advantages will be set forth in part in the description which follows and, in part, will be apparent from the description, or may be learned by practice of the invention.

According to the present invention there is provided an apparatus and method as set forth in the appended claims. Other features of the invention will be apparent from the dependent claims, and the description which follows.

The foregoing and/or other aspects are achieved by providing a setting method of setting an image forming apparatus, the setting method including: receiving a selection of a backup file stored in a backup file format to be restored to an original format, reading out the selected backup file from a storage medium, displaying a screen with all of a plurality of user setting items included in the read-out backup file, selecting at least one user setting item to be restored from all of the user setting items displayed on the screen, and setting the image forming apparatus by restoring the at least one selected user setting item selectively.

The screen may display a plurality of user setting items classified into a plurality of groups according to characteristics of the user setting items, and may display a select area corresponding to each of group names of the groups classifying the user setting items and beside each of the plurality of user setting items. In this case, when the select area displayed beside the group name is selected, all of the user setting items belonging to a corresponding group may be selected collectively.

The screen may display all of the user setting items including stored user setting items and unstored user setting items. In this case, the unstored user setting items may be displayed in a non-selectable state.

A select area may be displayed corresponding to each of all of the user setting items. A select state of the stored user setting item is variable according to a user's selection.

The setting method may further include: displaying a user interface (UI) screen to set the image forming apparatus, and if each of the user setting items is set by the user through the UI screen, storing a backup file including information regarding the set user setting items in the storage medium. In this case, the UI screen may display the user setting items classified into a plurality of groups according to characteristics of the user setting items.

The setting method may further include: displaying a selection screen to select one of a first backup mode in which all of the user setting items are collectively set and a second backup mode in which a portion of the user setting items is selectively set, displaying a UI screen to display all of the user setting items classified into a plurality of groups according to characteristics of the user setting items when the second backup mode is selected, and storing a backup file including information regarding the user setting item set through the UI screen.

The backup file may be compressed and stored individually or collectively in each group.

The storage medium may be at least one of the image forming apparatus, an external memory apparatus connected to the image forming apparatus, a host apparatus connected to the image forming apparatus, and a web server.

The foregoing and/or other aspects are achieved by providing a method of storing a backup file, which generates a backup file to set an image forming apparatus and stores the backup file, the method including: displaying a UI screen including a plurality of user setting items classified into a plurality of groups according to characteristics of the user setting items, receiving a user setting for the plurality of user setting items on the UI screen, and storing the user setting items set by the user for each group.

The method may further include displaying a selection screen to select one of a first backup mode in which all of the user setting items are collectively set and a second backup mode in which a portion of the user setting items is selectively set. If the second backup mode is selected, at least a portion of the user setting items may be selected from all of the user setting items and may be displayed on a UI screen so that a user setting value is input through the UI screen.

The plurality of user setting items may be classified by a directory or a tag.

The backup file may be stored in at least one of the image forming apparatus, an external memory apparatus connected to the image forming apparatus, a host apparatus connected to the image forming apparatus, and a web server.

The foregoing and/or other aspects are achieved by providing a setting apparatus to set an image forming apparatus, the setting apparatus including: an input unit through which a backup file to be restored is selected, a display unit which displays a screen displaying a plurality of user setting items included in the backup file selected through the input unit, and a controller which, when at least one of the user setting items on the screen is selected through the input unit, restores the at least one selected user setting item selectively and sets the image forming apparatus. In this case, the controller may set the image forming apparatus by restoring the user setting item selected by the user.

The screen may display a plurality of user setting items classified into a plurality of groups according to characteristics of the user setting items, and may display a select area corresponding to each of group names of the groups classifying the user setting items or corresponding to each of the plurality of user setting items. In this case, if the select area displayed beside the group name is selected, all of the user setting items belonging to a corresponding group may be selected collectively.

The screen may display all of the user setting items including stored user setting items and unstored user setting items, and the unstored user setting items are displayed in a non-selectable state.

A select area may be displayed beside each of all of the user setting items, and a select state of the select area of the stored user setting items is variable according to a user's selection.

If a setting request is input through the input unit, the controller may display a UI screen including the plurality of user setting items classified into the plurality of groups according to the characteristics of the user setting items, and if inputting user's setting for each user setting item on the UI screen is completed, the controller may store a backup file recording the user setting items in a storage medium.

If a setting request is input through the input unit, the controller may display a selection screen to select a first backup mode in which all of the user setting items are collectively set and a second backup mode in which a portion of the user setting items is selectively set, and if the second backup mode is selected on the selection screen, the controller may display a UI screen displaying all of the user setting items classified into groups according to characteristic of the user setting items. The controller may store a file including information regarding a user setting item set through the UI screen in a storage medium.

At least one of the UI screens may be a UI screen in which all of the user setting items or a portion of the user setting items are classified into a plurality of groups according to characteristics of the user setting items.

The storage medium may be at least one of the image forming apparatus, an external memory apparatus connected to the image forming apparatus, a host apparatus connected to the image forming apparatus, and a web server.

The foregoing and/or other aspects are achieved by providing a method of restoring a backup file, the method including: displaying a plurality of user setting items included in a backup file; receiving an input selection from a user as to at least one of the user setting items to be restored; and restoring the selected at least one user setting item.

The plurality of user setting items may be displayed in a selected state in a select area corresponding to each of the plurality of user setting items, and specific select areas may be unselected based on the user's input.

The plurality of user setting items may be displayed in an unselected state in a select area corresponding to each of the plurality of user setting items, and specific select areas may be selected based on the user's input.

The foregoing and/or other aspects are achieved by providing a method of setting an image forming apparatus, the method including: displaying a plurality of pre-stored and unstored user setting items included in a backup file; receiving an input selection from a user as to at least one of the pre-stored user setting items to be restored; and restoring the selected at least one pre-stored user setting item, wherein the pre-stored user setting items are displayed in an activated state so that the pre-stored items can be selected by the user, and the unstored user setting items are displayed in a deactivated state so that the unstored items are not able to be selected by the user.

According to at least one embodiment, the user can restore and store the backup file more easily and efficiently, thereby setting the function of the image forming apparatus.

### BRIEF DESCRIPTION OF THE DRAWINGS

These and/or other aspects and advantages will become apparent and more readily appreciated from the following description of the embodiments, taken in conjunction with the accompanying drawings of which:
FIG. 1 is a block diagram illustrating a system to explain processes of storing and restoring a backup file according to at least one embodiment;
FIG. 2 is a block diagram illustrating a setting apparatus according to at least one embodiment;
FIGS. 3 to 7 are views to explain diverse examples of restoring a backup file;
FIGS. 8 to 10 are views to explain diverse examples of backing up a backup file;
FIG. 11 is a block diagram illustrating the setting apparatus in detail;
FIG. 12 is a flowchart illustrating a setting method according to at least one embodiment; and
FIG. 13 is a flowchart illustrating a method of storing a backup file according to at least one embodiment.

### DETAILED DESCRIPTION

Reference will now be made in detail to example embodiments, examples of which are illustrated in the accompanying drawings, wherein like reference numerals refer to the like elements throughout. Example embodiments are described below to explain the present disclosure by referring to the figures.

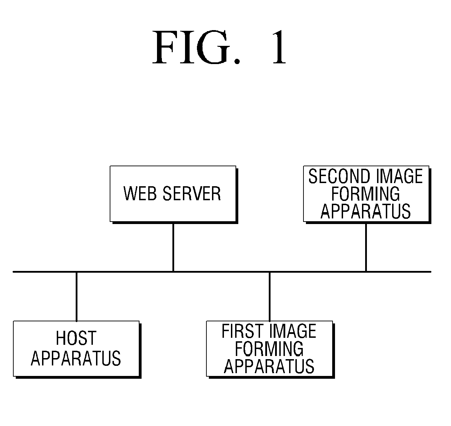

FIG. 1 illustrates a system to explain a method of storing a backup file and a setting method according to at least one embodiment. The system of FIG. 1 includes a host apparatus, a first image forming apparatus and a second image forming apparatus, and a web server. Although the web server is illustrated as a single standalone apparatus in FIG 1, it may be embedded in an image forming apparatus. Also, although the system of FIG. 1 includes two image forming apparatuses and a single host apparatus, the numbers of the image forming apparatuses and the number of the host apparatuses are not limited thereto. The host apparatus of FIG. 1 may be any of diverse types of apparatuses that can access an image forming apparatus and can serve as a host, such as a personal computer (PC), a laptop computer, or a personal digital assistant (PDA). Also, the image forming apparatus may be any of diverse types of apparatuses, such as a printer, a scanner, a facsimile machine, or a multifunction peripheral. Also, the backup file recited in this specification refers to a file that stores diverse information on whether the function of the image forming apparatus is on or off and on the extent to which the function is applied, that is, stores setting information. The backup file may be called a "setting file" or a "configuration file."

Referring to FIG. 1, a user may set the function of the image forming apparatus using the host apparatus or the image forming apparatus itself. Hereinafter, a process of setting the image forming apparatus using the host apparatus will be explained by way of an example.

There are a direct method and an automatic method of setting an image forming apparatus. In the direct setting method, all items are displayed in order for a user to directly set the function of the image forming apparatus by checking all of the items one by one. In the automatic method, a pre-stored backup file is restored and is used to set the function of the image forming apparatus automatically.

In order to restore the backup file, the user selects a folder containing the backup file which has been pre-set and backed-up and identifies the backup file. According to various exemplary embodiments, the backup file may be read out from a memory embedded in the host apparatus, a memory embedded in the image forming apparatus, an external storage medium (for example, a memory card or a universal serial bus (USB) memory) connected to the host apparatus or the image forming apparatus, or an external server (for example, a web server or an embedded server). The user may select the backup file to be restored by directly inputting the file name of the backup file or by checking a list of backup files and selecting one of them.

If the user selects one of the pre-stored backup files, information regarding user setting items included in the backup file is displayed on a screen. In this case, only the user setting item(s) that is stored in the backup file, that is, only the user setting item(s) that is pre-set by the user, among all of the user setting items, may be displayed. Also, according to another exemplary embodiment, even though all of the user setting items are displayed, the pre-stored user setting items are displayed in an activated state so that they can be selected, whereas the unstored user setting items are displayed in a deactivated state so that they cannot be selected.

The user may check the displayed user setting items and determine which item is to be restored. In this case, some of the displayed user setting items may be selected and restored.

The host apparatus restores only the user setting item selected by the user and sets the function of the image forming apparatus. More specifically, the host apparatus reads out a source corresponding to the selected user setting item from a source file of a setup file corresponding to the image forming apparatus, and applies the source to the image forming apparatus.

In FIG. 1, the host apparatus is connected to a plurality of image forming apparatus over a network. However, even if the host apparatus is connected to an image forming apparatus directly through a local interface, the backup file may be restored in the above-described method. Also, even if there is an attempt at setting the image forming apparatus from the image forming apparatus itself or the web server, the user setting items stored in the backup file are displayed so that the user can selectively restore the backup file to its original state.

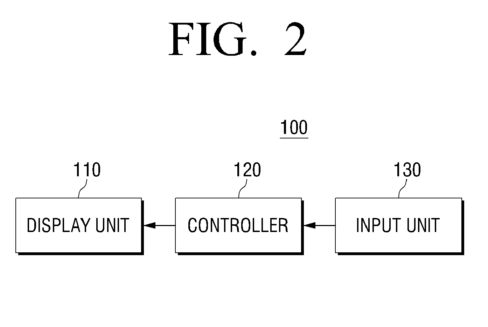

FIG. 2 is a block diagram illustrating a setting apparatus according to at least one embodiment. Referring to FIG. 2, a setting apparatus 100 includes a display unit 110, a controller 120, and an input unit 130. The setting apparatus 100 of FIG. 2 may be realized as a host apparatus, an image forming apparatus, or a web server within a system.

The display unit 110 is employed in the setting apparatus 100 to display various screens. The display unit 110 may be realized in various forms, such as a liquid crystal display (LCD), a cathode ray tub (CRT) display, or a touch screen, for example.

If the user selects a pre-stored backup file to be used to be restored to an original format, the controller 120 controls the display unit 110 to display a screen displaying user setting items included in the selected backup file. In this case, the backup file may be read out from a storage medium included in the setting apparatus 100, an external storage medium connected to the setting apparatus 100, a storage medium included in an external apparatus (for example, another host apparatus or another image forming apparatus), or an external storage medium.

The input unit 130 receives a user's selection of at least one user setting item on the screen displayed on the display unit 110. The input unit 130 may include various inputting devices, such as a keyboard, a mouse, a joystick, a keypad, and a touch screen, for example. In the case of a touch screen, the input unit 130 may be integrally formed with the display unit 110. The user may input his/her selection by touching the user setting item on the screen or by moving a cursor to the user setting item using the inputting means.

The controller 120 sets the image forming apparatus by selectively restoring the user setting item selected by the user through the input unit 130. Setting values relating to the restored user setting item may be read out from a driver program to drive the image forming apparatus or a data file included in a web application.

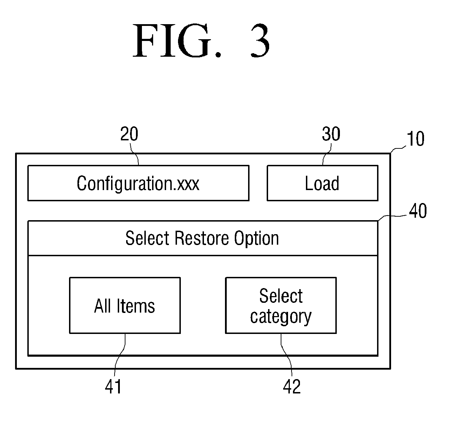

FIG. 3 is a view illustrating an example of a user interface (UI) screen through which the user selects a backup file to be restored. Referring to FIG. 3, a UI screen 10 includes an input area 20 to input a backup file name, a menu 30 to request loading of a backup file corresponding the input backup file name, and an option selection area 40 to select a restoring option. The option selection area 40 may include a first menu 41 to restore all user setting items stored in the backup file as they are, and a second menu 42 to select some of the user setting items stored in the backup file and restore the selected user setting items. The first menu 41 and the second menu 42 may be called an "entire item restoring option" and a "selected item restoring option," respectively.

If the first menu 41 is selected, the image forming apparatus may be set directly by restoring all of the user setting items pre-stored in the backup file. However, in this exemplary embodiment, the UI screen displaying the user setting items stored in the backup file is displayed so that the user can identify the user setting items.

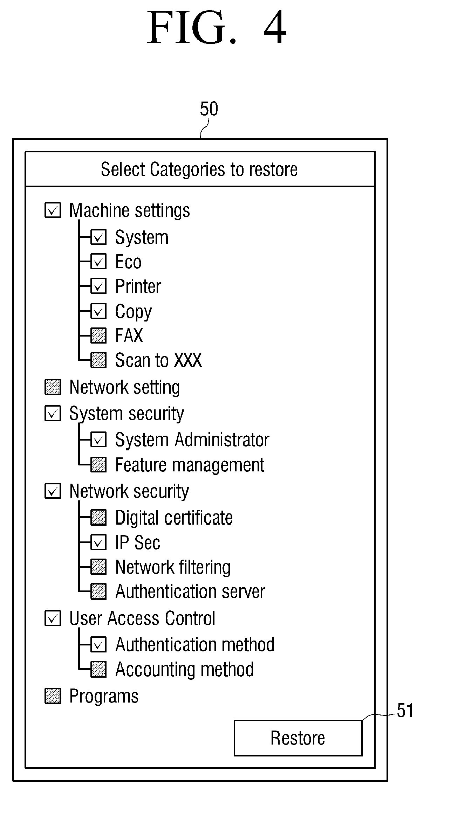

That is, if the first menu 41 is selected, the UI screen 10 may be converted into a screen shown in FIG. 4.

FIG. 4 is a view illustrating an example of a UI screen to set the image forming apparatus by applying all of the user setting items. Referring to FIG. 4, if the first menu 41 is selected, pre-stored user setting items, such as System, Eco, Printer, Copy, System Administrator, IP Sec, Authentication method are displayed on a screen 50 along with unstored user setting items, such as Fax, Scan to XXX, Network setting, Feature management, Digital certificate, Network filtering, Authentication server, Accounting method, and Programs. The pre-stored user setting items are displayed in an activated state so that the pre-stored items can be selected by the user, whereas the remaining user setting items are displayed in a deactivated state so that the unstored items can not be selected by the user.

Also, the user setting items are classified into a plurality of groups according to their characteristics. In this case, the user setting items may be displayed in a tree structure as shown in FIG. 4.

Classifying into groups may be performed by a manufacturer of the image forming apparatus or the driving program or may be performed when the backup file is generated by the user. Referring to FIG. 4, the group may be classified into Machine settings, Network setting, System security, Network security, User Access Control, and Programs.

The user setting items "System", "Eco", "Printer", "Copy", "Fax", "Scan to XXX", relate to the image forming apparatus's own functions and they belong to the group "Machine settings", and the user setting items "System Administrator" and "Feature management" relate to security maintenance of a system and belong to the group "System security". The other user setting items may belong to groups according their respective characteristics.

Also, check areas, which allow a user to select specific items, may be displayed beside the group name of each group or each user setting item. The check area may be changed to a checked state or an unchecked state alternately according to a user's selection. The check state may be changed by touching the check area or moving a cursor. However, the user selection areas are not limited to check areas, but may be any type of user input selection area.

As described above, if the first menu 41 is selected, all of the user setting items stored are displayed in the checked state as shown in FIG. 4. Also, since the first menu 41 is a menu to apply the pre-stored user setting items as they are, the check area may not be displayed or the checked user setting items may be displayed in a deactivated state.

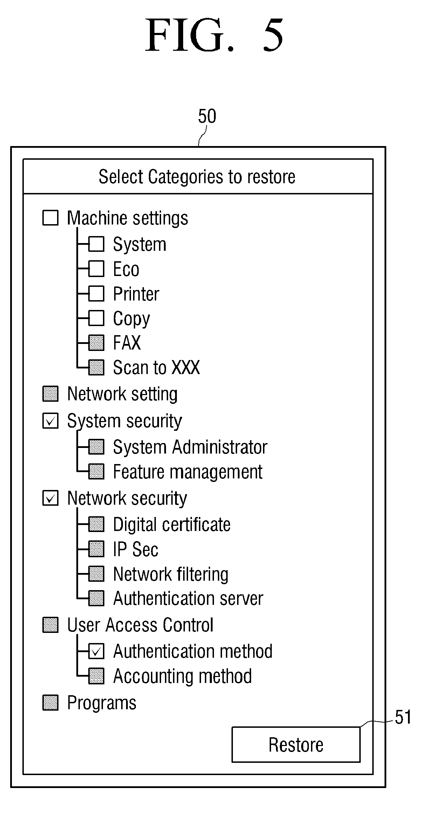

On the other hand, if the second menu 42 is selected, a screen 50 including both the pre-stored user setting items and the unstored user setting items may be displayed, as shown in FIG. 5. On the screen 50, only the pre-stored user setting items may be displayed in the activated state so that they can be selected. The user selects a user setting item that he/she wishes to restore and selectively restores and sets it. In FIG. 5, check areas may be displayed.

In this case, an initial check state of each check area of the stored user setting items on the screen 50 may be different according to exemplary embodiments. That is, all of the user setting items may be displayed in the checked state or in the unchecked state. If all of the user setting items are displayed in the checked state, the same screen 50 as in FIG. 4 is displayed. In this case, the user may cancel the items that he/she does not wish to restore by unchecking the check area. Conversely, if all of the user setting items are displayed in the unchecked state, the user may change the check state of the check area by selecting the item that he/she wishes to restore.

The user setting items under a group may be collectively changed to the checked state or the unchecked state by checking or unchecking the check area of the group. Accordingly, the user can restore or cancel the user setting item of the group collectively and thus easily sets the image forming apparatus.

The user setting items may be grouped by directory or tag.

The user identifies and sets the user setting items through the UI screen 50 as shown in FIGS. 4 or 5 and then selects a restoring menu 51, thereby completing the setting procedure.

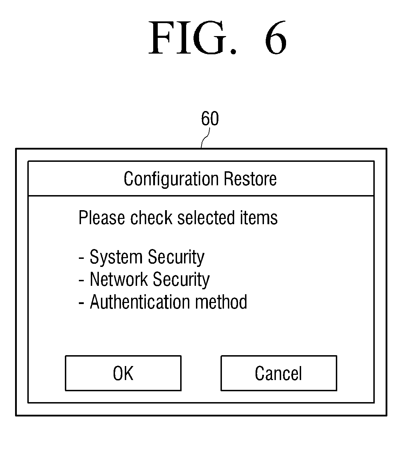

FIG. 6 illustrates an example of a screen when the restoring menu 51 is selected in the state of FIGS. 4 or 5. Referring to FIG. 6, information on the selected user setting item is displayed on a screen 60 and menus (OK, Cancel) to confirm or cancel the information are displayed. If the user determines that the user setting item has been selected appropriately, the user selects the menu OK.

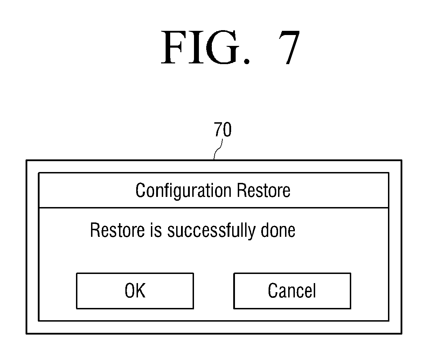

FIG. 7 illustrates an example of a message 70 informing that the restoring has been completed. Such a message may be displayed after the restored user setting item has been used for setting.

The above exemplary embodiments are based on a premise that the backup file is stored, that is, backed up after having been set by the user initially. Hereinafter, a method of storing the backup file will be explained.

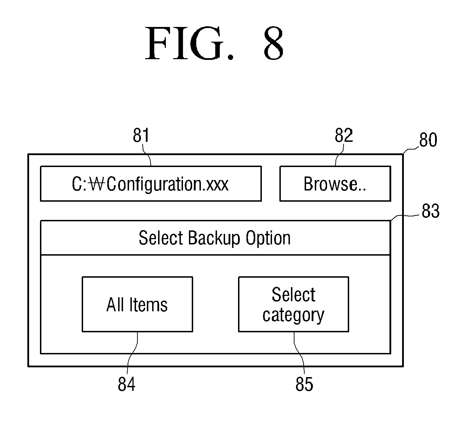

FIG. 8 illustrates an example of a selection screen 80 which is displayed if the user selects a menu to generate a backup file or a menu to set an image forming apparatus.

Referring to FIG. 8, the selection screen includes an input area 81 to input a file name of a backup file, a menu 82 to store the backup file, and a selection area 83 to select a backup option. Various backup options may be displayed in the selection area 83.

Referring to FIG. 8, the selection area 83 may display a first menu 84 to designate a first backup mode in which all user setting items are collectively set, and a second menu 85 to designate a second backup mode in which a portion of the user setting items is selected and set.

If the first menu 84 is selected, all of the user setting items to set the image forming apparatus may be selected collectively.

On the other hand, if the second menu 85 is selected, a UI screen to select at least part of the user setting items is displayed.

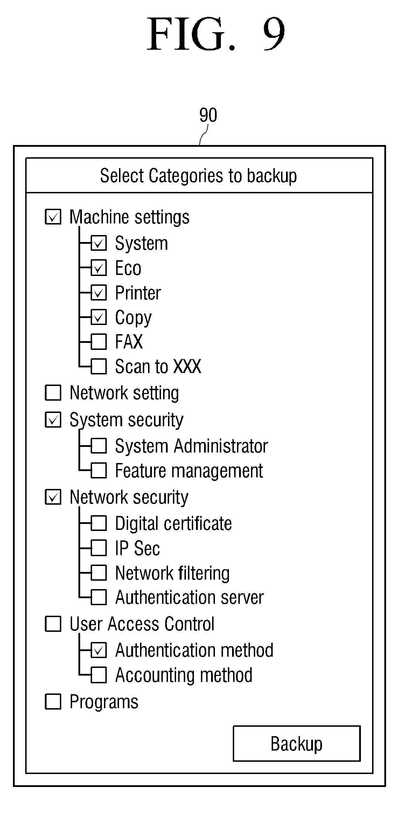

FIG. 9 illustrates an example of a UI screen displayed if the second menu 85 is selected. Referring to FIG. 9, a UI screen 90 displays diverse user setting items which are classified into groups and displays a check area beside each of the user setting items or beside each group name. Further, while a check area is shown, the embodiment is not limited thereto and any other type of user input area to select a category may be used instead of the check area. As described above, the items may be grouped by directory or tag.

For example, if the user setting items are grouped by directory, the user setting items for each directory may be grouped and displayed. Alternatively, if the user setting items are grouped by tag, the groups are identified by tags using an extensible markup language (XML). Each group is classified into at least one level such that the group may be classified into an upper group and a lower group.

If the screen 90 of FIG. 9 is displayed, the user freely selects the user setting items that he/she wishes to set. In this case, if a group name is selected, user setting items belonging to the group may be collectively set. The user setting items on the screen 90 of FIG. 9 may be all displayed in the checked state or in the unchecked state.

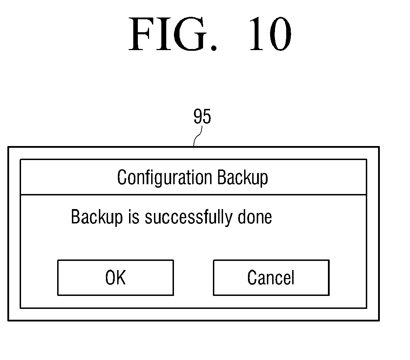

The user may select a menu "Backup" after having selected all of the items that he/she wishes to set or back-up. Consequently, a backup file including information about the selected user setting items is generated and stored in a storage medium, and then a backup completeness message 95 is displayed as shown in FIG. 10.

The backup file may be stored in various types of apparatuses. For example, the backup file may be stored in the host apparatus or in the image forming apparatus.

More specifically, if the user sets the image forming apparatus through the image forming apparatus, the user may input a user setting backup command through an operation panel provided on the image forming apparatus. Accordingly, the UI screens of FIGS. 8 and 9 are displayed in sequence and the backup file is generated in the above-described manner. The generated backup file may be stored in a memory embedded in the image forming apparatus or in a memory connected to the image forming apparatus.

On the other hand, the user may set the image forming apparatus through the host apparatus. In this case, the user may store the backup file in a local hard disk drive provided inside the host apparatus or a server provided outside the host apparatus, or in a memory embedded in the image forming apparatus.

If the backup file is stored in an external apparatus, the apparatus which generates the backup file generates a data packet including the generated backup file and transmits it according to a pre-defined communication rule.

The user gets access to a web server embedded in the image forming apparatus or a separate web server using a web browser installed in the host apparatus, and performs setting and backup file storing.

That is, the storage medium may be at least one of the host apparatus, the image forming apparatus, and the internal or external memory connected to other apparatuses.

The backup file may be compressed individually or collectively in each group, and may be stored in the storage medium. Therefore, the user can handle the backup file easily.

Generating and storing the backup file as shown in FIGS. 8 to 10 may be performed in the setting apparatus 100 shown in FIG. 2, but this should not be considered as limiting. An apparatus other than the setting apparatus 100 may classify the items into groups according to characteristics of the items and display the user setting items arranged for each group, and may generate a backup file for the items selected by the user and store the backup file. In this case, the setting apparatus 100 may receive the backup file and restore it.

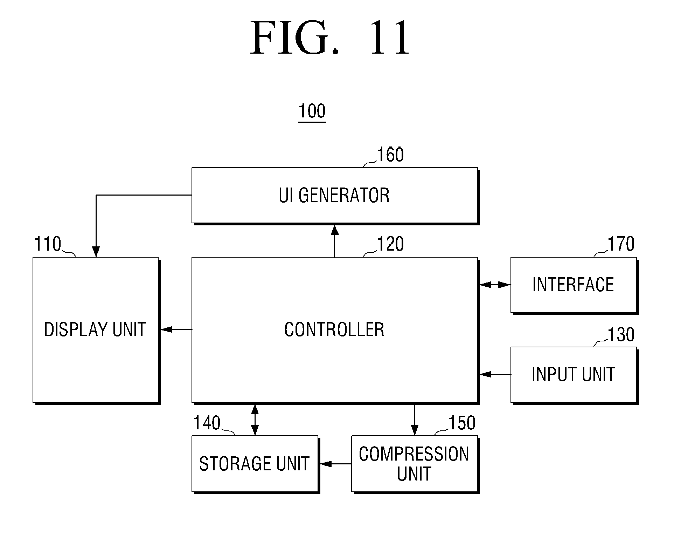

FIG. 11 is a block diagram illustrating another example of the setting apparatus 100. As shown in FIG. 11, the setting apparatus 100 includes a display unit 110, a controller 120, an input unit 130, a storage unit 140, a compression unit 150, a UI generator 160, and an interface 170.

The storage unit 140 may store diverse programs, such as an operating system, an application program, and a driver program and may store setting data set by the user.

The input unit 130 may receive diverse user's selections, such as a setting command, a backup file storing command, and a backup file restoring command.

The controller 120 controls the overall operation of the setting apparatus 100 according to a command input through the input unit 130.

For example, if the setting command or the backup file storing command is input, the controller 120 controls the UI generator 160 to generate a screen displaying entire user setting items and then displays the screen on the display unit 110.

When the user selects items to be set or restored, the controller 120 sets the image forming apparatus using the selected items or generates a backup file and stores it in the storage unit 140 separately from the setting operation.

The controller 120 controls the compression unit 150 to compress the backup file individually or collectively in each group and store the backup file. The compression unit 150 may be omitted in an exemplary embodiment.

If the backup file restoring command is input, the controller 120 reads out the backup file from the storage unit 140 and controls the UI generator 160 and the display unit 110 to display the user setting items included in the backup file. In this case, the backup file is not necessarily read out from the storage unit 140 and may be received from an external storage medium according to another exemplary embodiment.

Accordingly, if the user selectively sets the user setting items on the displayed screen, the controller 120 restores the set user setting items, thereby setting the image forming apparatus.

The interface 170 performs interfacing with external apparatuses or networks. That is, the interface 170 may be realized as a local interface or a network interface. For example, the interface 170 may transmit information regarding the user setting items restored by the controller 120 and the setting command to set the items to the image forming apparatus. If the image forming apparatus is the setting apparatus, the setting command is not required to be transmitted through the interface 170.

In FIG. 11, the setting apparatus 100 performs both the operation of storing the backup file and the operation of restoring the backup file. However, the two operations are not necessarily performed in a single apparatus. That is, the setting apparatus 100 of FIG. 11 may be designed only to generate and store the backup file or may be designed only to restore the backup file.

All of the elements shown in FIG. 11 may be included or some of them may be omitted. If the setting apparatus 100 is the image forming apparatus, the setting apparatus 100 may further include an engine part, such as a printing unit and a scanning unit.

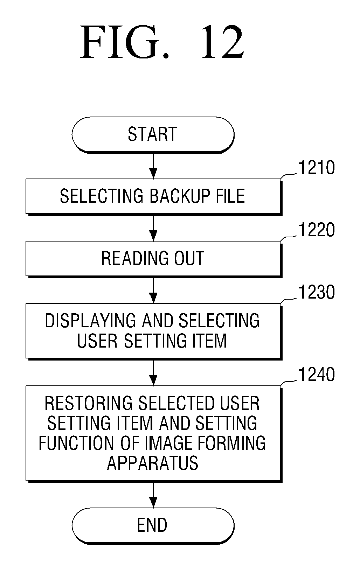

FIG. 12 is a flowchart illustrating a setting method according to at least one embodiment. More specifically, a method of setting an image forming apparatus using an already-generated backup file will be explained.

Referring to FIG. 12, an already-generated backup file may be selected by the user (1210). In this case, the backup file may be selected by inputting a backup file name or selecting the backup file from a backup file list. The backup file list may display each backup file in an icon form.

For example, the backup file may be selected using the UI screen shown in FIG. 3.

In this case, an option to restore the backup file may be selected. Accordingly, all of the user setting items may be restored as they are or part of them may be selectively restored.

If the backup file is selected, the selected backup file is read out from the storage medium (1220). The storage medium may be embedded in an apparatus performing the setting method or may be, but not limited to, a connected memory, a memory embedded in an external apparatus, or an externally-connected memory.

Accordingly, the user setting items included in the read-out backup file are displayed on the screen so that the user can select the user setting items (1230). According to another exemplary embodiment, the user may not select the user setting items, as the user setting items may be pre-selected in advance. However, even in this case, the user setting items are displayed so that the user re-considers whether to restore the backup file or not.

If the user selects the user setting items, the selected user setting items are restored and the function of the image forming apparatus is set (1240).

As described above, the user can know the contents of the backup file selected by the user and additionally select the user setting items arbitrarily and restore the user setting items selectively.

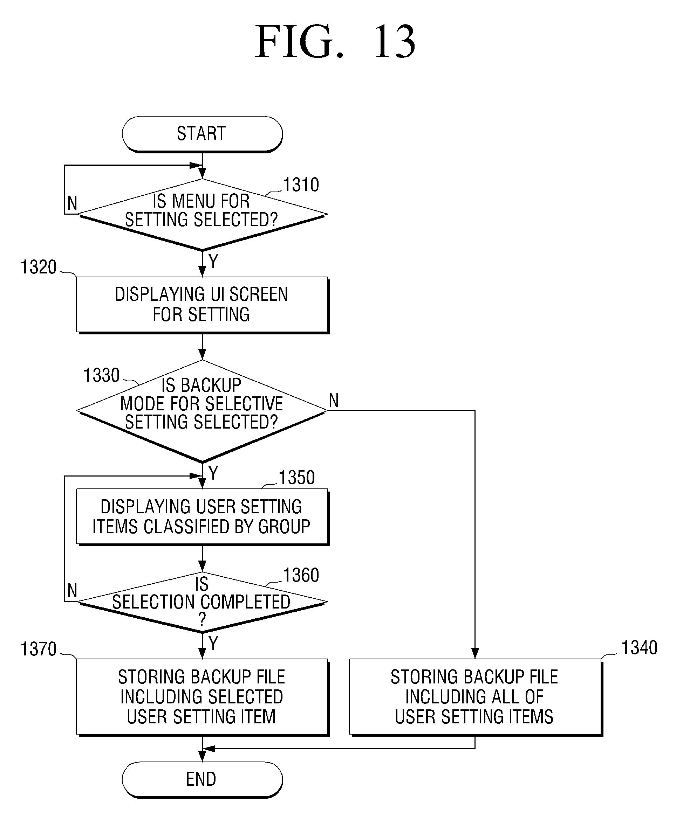

FIG. 13 is a flowchart illustrating a method of storing a backup file according to an exemplary embodiment. Referring to FIG. 13, if a setting menu is selected, that is, if a setting command or a backup file storing command is input (1310), a UI screen to set an image forming apparatus is displayed (1320). For example, the screen of FIG. 8 may be displayed.

In this case, if the user selects a backup mode to set all of the items rather than selecting a backup mode to selectively set items (1330: N), a backup file including all of the user setting items is generated and stored (1340).

If the backup mode to selectively set the items is selected (1330: Y), the user setting items classified by group are displayed (1350). The user setting items may be displayed as shown in FIG. 9.

Therefore, if the user selects at least part of the user setting items (1360), a backup file including the selected user setting items is generated and stored (1370).

According to exemplary embodiments described above, the user setting items are classified and set by group and are then backed up, and the user setting items are restored selectively by the user and used to set the image forming apparatus.

Although the backup file is stored and restored for the purpose of setting the image forming apparatus in the at least one embodiment, the operation of storing and restoring the backup file and setting using the backup file may not be performed only for the image forming apparatus. That is, functions of various peripheral apparatuses or home appliances other than the image forming apparatus may be set using the above-described configurations.

Although at least one embodiment has been shown and described, the present disclosure is not limited to the described at least one embodiment. Instead, it would be appreciated by those skilled in the art that changes may be made to the at least one embodiment without departing from the principles of the disclosure, the scope of which is defined by the claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A setting method for setting an image forming apparatus, the setting method comprising:
selecting a backup file to be restored;
reading out the selected backup file from a storage medium;
displaying a screen displaying all of a plurality of user setting items included in the read-out backup file;
selecting a user setting item to be restored from all of the user setting items on the screen; and
setting the image forming apparatus by restoring the selected user setting item only.

2. The setting method as claimed in claim 1, further comprising selecting a restoring option,
wherein the setting comprises setting the image forming apparatus by restoring all of the user setting items if the selected restoring option is an all items restoring option, or by restoring the user setting item selected from all of the user setting items if the selected restoring option is a selected item restoring option.

3. The setting method as claimed in claim 1 or 2, wherein the screen displays a plurality of user setting items classified into a plurality of groups according to characteristics of the user setting items and arranged in a tree structure, and displays a check area beside each group name of the groups classifying the user setting items and beside each of the plurality of user setting items,
wherein a check state of the check area is variable according to a user's selection.

4. The setting method as claimed in any one of claims 1 to 3, wherein the screen displays all of the user setting items including stored user setting items and unstored user setting items in a tree structure,
wherein the unstored user setting items are displayed in a non-selectable state and the stored user setting items are displayed in a selectable state.

5. The setting method as claimed in anyone of claims 1 to 4, further comprising:
displaying a user interface (UI) screen to set the image forming apparatus; and
if each of the user setting items is set by the user through the UI screen, storing a backup file including information regarding the set user setting items in the storage medium,
wherein the UI screen displays the user setting items classified into a plurality of groups according to characteristics of the user setting items.

6. The setting method as claimed in any one of claims 1 to 5, wherein the backup file is compressed and stored individually or collectively in each group,
wherein the storage medium is at least one of the image forming apparatus, an external memory apparatus connected to the image forming apparatus, a host apparatus connected to the image forming apparatus, and a web server.

7. A method for storing a backup file, which generates a backup file for setting an image forming apparatus and stores the backup file, the method comprising:
displaying a UI screen including a plurality of user setting items classified into a plurality of groups according to characteristics of the user setting items;
receiving a user setting for the plurality of user setting items on the UI screen; and
storing the user setting items set by the user for each group.

8. The method as claimed in claim 7, further comprising displaying a selection screen to select one of a first backup mode in which all of the user setting items are collectively set and a second backup mode in which a portion of the user setting items is selectively set,
wherein, if the second backup mode is selected, at least a portion of the user setting items is selected from all of the user setting items and is displayed on a UI screen so that a user setting value is input through the UI screen.

9. The method as claimed in claim 7 or 8, wherein the backup file is stored in at least one of the image forming apparatus, an external memory apparatus connected to the image forming apparatus, a host apparatus connected to the image forming apparatus, and a web server.

10. A setting apparatus for setting an image forming apparatus, the setting apparatus comprising:
an input unit through which a backup file to be restored is selected;
a display unit which displays a screen displaying a plurality of user setting items included in the backup file selected through the input unit; and
a controller which, if at least one of the user setting items on the screen is selected through the input unit, restores the selected user setting item selectively and sets the image forming apparatus.

11. The setting apparatus as claimed in claim 10, wherein the screen displays a plurality of user setting items classified into a plurality of groups according to characteristics of the user setting items and arranged in a tree structure, and displays a check area beside each of groups names of the groups classifying the user setting items and beside each of the plurality of user setting items,
wherein a check area of the check state is variable according to a user's selection.

12. The setting apparatus as claimed in claim 10 or 11, wherein the screen displays all of the user setting items including stored user setting items and unstored user setting items in a tree structure,
wherein the unstored user setting items are displayed in a non-selectable state, and the stored user setting items are displayed in a selectable state.

13. The setting apparatus as claimed in any one of claims 10 to 12, wherein, if a setting request is input through the input unit, the controller displays a UI screen including the plurality of user setting items classified into the plurality of groups according to the characteristics of the user setting items,
wherein, if inputting a user's setting for each user setting item on the UI screen is completed, the controller stores a backup file recording the user setting items in a storage medium.

14. The setting apparatus as claimed in any one of claims 10 to 13, wherein, if a setting request is input through the input unit, the controller displays a selection screen to select a first backup mode in which all of the user setting items are collectively set and a second backup mode in which part of the user setting items is selectively set,
wherein, if the second backup mode is selected on the selection screen, the controller displays a UI screen displaying all of the user setting items classified into groups according to characteristic of the user setting items,
wherein the controller stores a file including information regarding a user setting item set through the UI screen in a storage medium.

15. The setting apparatus as claimed in any one of claims 10 to 14, wherein the storage medium is at least one of the image forming apparatus, an external memory apparatus connected to the image forming apparatus, a host apparatus connected to the image forming apparatus, and a web server.
